# EUROPEAN PATENT APPLICATION

(11) **EP 4 769 714 A1**
(43) Date of publication of application: **01.07.2026**
(21) Application number: 25845212.7
(22) Date of filing: 17.07.2025
(51) Int. Cl.: H01M 50/24, H01M 50/293, H01M 10/42, A62C 3/16, A62C 35/10, A62D 1/00

(54) **BATTERY PACK**

(30) Priority: 26.07.2024 KR 20240099399
(71) Applicant: LG Energy Solution, Ltd., Seoul 07335 (KR)
(72) Inventor: HAN, Hyun Gyu, Daejeon 34122 (KR)
(74) Representative: Plasseraud IP
(86) International application number: PCT/KR2025/010550
(87) International publication number: WO 2026/023997

(57) **Abstract**

Embodiments provide a battery pack. The battery pack includes a pack housing including a base plate and a side wall, a plurality of battery cell assemblies on the base plate, a lid coupled to the side wall of the pack housing, and a foaming device configured to release a foam layer into an inner space defined by the pack housing and the lid.

## Description

### [Technical Field]

The present disclosure relates to a battery pack. The present application claims the benefit of priority based on Korean Patent Application No. 10-2024-0099399, filed on July 26, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present disclosure is directed to providing a battery pack with improved safety.

### [Technical Solution]

Embodiments provide a battery pack. The battery pack includes a pack housing including a base plate and a side wall, a plurality of battery cell assemblies on the base plate, a lid coupled to the side wall of the pack housing, and a foaming device configured to release a foam layer into an inner space defined by the pack housing and the lid.

The foaming device may be configured to release the foam layer in response to a thermal runaway event or external impact.

The battery pack may further include electronic components on the base plate, and a space occupancy ratio of the foam layer released from the foaming device, the electronic components, and the plurality of battery cell assemblies in the inner space may be 90% or more.

The foaming device may be outside the pack housing.

The foaming device may be in the inner space.

The foaming device may include a foaming agent configured to form the foam layer and a case containing the foaming agent.

The foaming agent may include silmagel.

The foaming device may be of a spring type or a rupture disk type.

The foaming device may be coupled to the side wall of the pack housing.

The foaming device may be coupled to the base plate of the pack housing.

The foaming device may be coupled to the lid of the pack housing.

The foamed layer may be porous.

The foam layer may be an insulating carbonized layer.

### [Advantageous Effects]

A battery pack according to embodiments of the present disclosure may include a foaming device configured to release a foam layer into an inner space of the battery pack in a thermal runaway event. Accordingly, when the thermal runaway event occurs in the battery pack, the propagation of the thermal runaway event can be blocked by the foam layer, thus leading to improvement of the safety of the battery pack.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view of a battery pack according to embodiments.
FIG. 2 is a cross-sectional view taken along line 1I-1I' of FIG. 1.
FIG. 3 is a diagram illustrating an effect of a battery pack according to embodiments.
FIG. 4 is a cross-sectional view of a battery pack according to other embodiments.
FIG. 5 is a cross-sectional view of a battery pack according to other embodiments.
FIG. 6 is a cross-sectional view of a battery pack according to other embodiments.
FIG. 7 is a cross-sectional view of a battery pack according to other embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

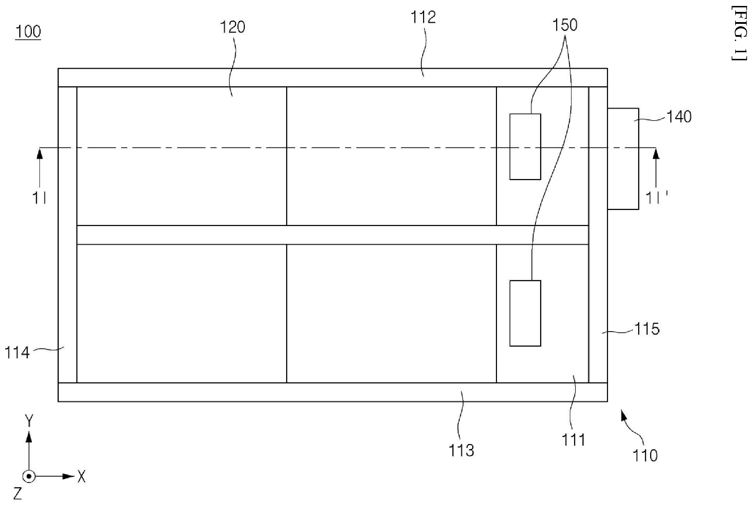

FIG. 1 is a plan view of a battery pack 100 according to embodiments.

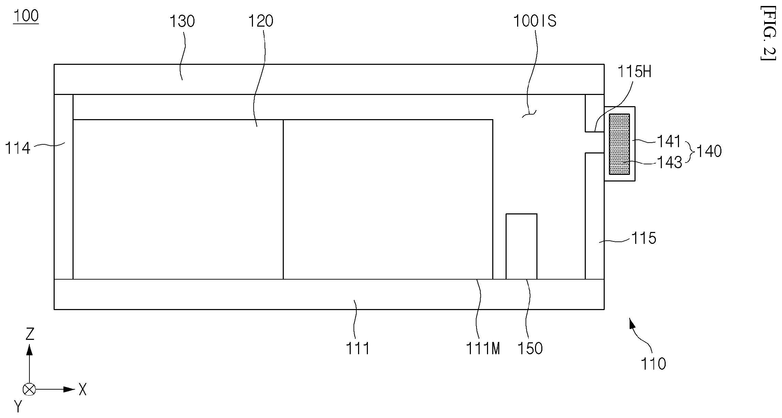

FIG. 2 is a cross-sectional view taken along line 1I-1I' of FIG. 1.

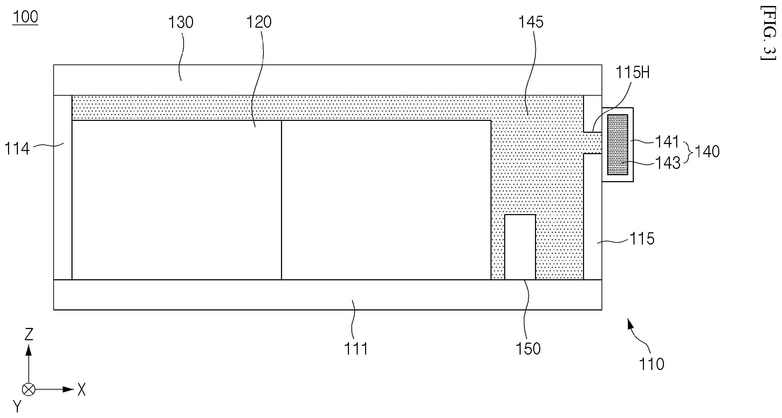

FIG. 3 is a diagram illustrating an effect of the battery pack 100 according to embodiments.

Referring to FIGS. 1 to 3, the battery pack 100 may include a pack housing 110, a plurality of battery cell assemblies 120, a lid 130, a foaming device 140, and electronic components 150. The battery pack 100 is a final form of a battery system to be mounted in a mobility or the like.

The pack housing 110 may include a base plate 111 and side walls 112, 113, 114, and 115. Here, two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The mounting surface 111M may face the plurality of battery cell assemblies 120. The X-axis direction, the Y-axis direction, and the Z-axis direction may be substantially perpendicular to one another.

The base plate 111 may have a flat plate shape. The side walls 112, 113, 114, and 115 may be substantially perpendicular to the base plate 111. The side walls 112, 113, 114, and 115 may be adjacent to edge portions of the base plate 111. The side walls 112, 113, 114, and 115 may be coupled to the edge portions of the base plate 111.

Each of the base plate 111 and the side walls 112 and 113 may be provided by an extrusion process. An extrusion direction of each of the base plate 111 and the side walls 112 and 113 may be the X-axis direction. That is, a YZ cross-section of each of the base plate 111 and the side walls 112 and 113 may be constant according to a position in the X-axis direction except for deformation due to additional tooling. Here, the YZ cross-section may be substantially parallel to the Y-axis direction and the Z-axis direction and be substantially perpendicular to the X-axis direction. The base plate 111 and the side walls 112 and 113 may be arranged in the Y-axis direction. The side walls 114 and 115 may also be provided by the extrusion process.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate on a midpoint between the plurality of unit plates coupled together by friction stir welding. Accordingly, the center beam 116 may be formed together with the center plate in the extrusion process and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the mounting surface 111M of the base plate 111 of the pack housing 110. The base plate 111 may support the plurality of battery cell assemblies 120. The side walls 112, 113, 114, and 115 may horizontally surround the plurality of battery cell assemblies 120.

The battery cell assemblies 120 may be arranged in the X-axis direction and the Y-axis direction. In the present example, two battery cell assemblies 120 are arranged in the X-axis direction and two battery cell assemblies 120 are arranged in the Y-axis direction such that the plurality of battery cell assemblies 120 form a matrix of two rows and two columns, but the technical idea of the present disclosure should not be understood as being limited thereto in any sense.

Hereinafter, the technical idea of the present disclosure will be described with reference to an embodiment in which the battery pack 100 is of a moduleless type and each of the plurality of battery cell assemblies 120 does not include a module frame. However, the embodiment is a non-limiting example and should not be understood as limiting the technical idea of the present disclosure in any sense. Based on the above description, those of ordinary skill in the art will be able to easily derive a plurality of battery cell assemblies each including a module frame and a module type battery pack including the plurality of battery cell assemblies. Each of the plurality of battery cell assemblies 120 may include a plurality of battery cells, a plurality of pads, and first and second integrated circuit assemblies.

Each of the plurality of battery cells may include an electrode assembly, an electrolyte, and a case. Each of the plurality of battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to embodiments, the plurality of battery cells may constitute a plurality of banks. The plurality of banks may include one or more battery cells connected in parallel. The plurality of banks may be connected to each other in series. The number of battery cells included in each of the plurality of banks and the number of banks connected to each other in series may be determined by a voltage and a current to be output through each of the plurality of battery cell assemblies 120.

According to embodiments, a cell stack may further include a plurality of separators. The plurality of separators may be interposed between the plurality of battery cells. The plurality of separators may include an elastic material and absorb swelling the plurality of battery cells. According to embodiments, the plurality of separators may be thermal barriers. According to embodiments, each of the plurality of separators may have high melting temperature and low thermal conductivity. According to embodiments, each of the plurality of separators may include a flame retardant material such as ceramic and a coated glass material. According to embodiments, the plurality of separators may be configured to release a fire retarding material and a fire extinguishing agent when a thermal runaway event occurs.

The first integrated circuit assembly may include an insulating frame, an integrated circuit, bus bars, wires, and an insulating cover. The integrated circuit assembly may include physical and functional components to provide an electrical connection between the plurality of battery cells, output resulting voltages of the plurality of battery cells, and measure voltages (or currents) of nodes inside a circuit composed of the plurality of battery cells.

The insulating frame may include an insulating material such as plastic. The insulating frame may cover front sides of the plurality of battery cells. The insulating frame may support the integrated circuit, the bus bars and the wires.

The bus bars may be short-circuited to positive electrode leads of battery cells of a first bank and negative electrode leads of one or more battery cells of a last bank. The bus bars may be welded to the positive electrode leads of the battery cells of the first bank and the negative electrode leads of the one or more battery cells of the last bank. Resulting voltages of the plurality of battery cells of the battery cell assembly 120 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes through sensing plates and sensing bars.

The sensing bars may include a conductive material. The sensing bars may have a rod shape. The sensing bars may be short-circuited to the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited to corresponding ones of the positive electrode leads and the negative electrode leads of the plurality of battery cells.

Each of the sensing plates may be connected to the integrated circuit. Voltages of the nodes inside the battery cell assembly 120 may be measured through the sensing plates.

The insulating cover may include an insulating material such as plastic. The insulating cover may be interference-fitted into the insulating frame. The insulating cover may cover the integrated circuit and the bus bars and thus electrical elements of the first and second integrated circuit assemblies may be protected.

The first integrated circuit assembly may include an insulating frame, an integrated circuit, bus bars, wires, and an insulating cover. The second integrated circuit assembly is substantially the same as the first integrated circuit assembly except that the second integrated circuit assembly does not include bus bars.

The lid 130 may be coupled to the side walls 112, 113, 114 and 115. The lid 130 may cover elements, such as the battery cell assemblies 120 and the electronic components 150, in an inner space 100IS of the battery pack 100. The lid 130 may be fixed to the battery pack 100 by a mechanical coupling means, e.g., a bolt.

According to embodiments, the discharge device 140 may be coupled to the pack housing 110. According to embodiments, the discharge device 140 may be coupled to the side wall 115 of the pack housing 110. According to embodiments, the discharge device 140 may be located outside the pack housing 110 and the lid 130. The discharge device 140 may be spaced apart from the plurality of battery cell assemblies 120 with the side wall 115 therebetween. The side wall 115 may include a foam hole 115H connected to the discharge device 140. The discharge device 140 may include a case 141 and a foaming agent 143.

The foaming agent 143 may be contained in the case 141. According to embodiments, the case 141 may include a rupture disk. When a thermal runaway event occurs in the battery pack 100, the rupture disk of the case 141 may be broken due to an increase in pressure of the inner space 100IS, thus causing the inside of the case 141 and the inner space 100IS of the battery pack 100 to be connected.

According to other embodiments, the case 141 may include a valve. When the thermal runaway event occurs in the battery pack 100, the valve of the case 141 may be opened due to an increase in pressure of the inner space 100IS, thus causing the inside of the case 141 and the inner space 100IS of the battery pack 100 to be connected.

The foaming agent 143 may contain a foaming fire-resistant material. Here, the foaming fire-resistant material may be configured to exhibit a foaming effect when heated. The foaming effect may include melting a surface-coated layer, bubbling, swelling, generating an insulating layer, and generating a ceramic layer.

The foaming agent 143 may be configured to form a foam layer 145 when the thermal runaway event occurs. The foam layer 145 may be introduced into the inner space 100IS through the foam hole 115H. A volume of the foam layer 145 may be greater than a volume of the foaming agent 143. The foam layer 145 may fill the inner space 100IS.

According to embodiments, an occupancy ratio of the foam layer 145, the battery cell assembly 120, and the electronic components 150 in the inner space 100IS of the battery pack 100 may be about 80% or more. According to embodiments, the occupancy ratio of the foam layer 145, the battery cell assembly 120, and the electronic components 150 in the inner space 100IS of the battery pack 100 may be about 85% or more. According to embodiments, an occupancy ratio of the foam layer 145, the battery cell assembly 120, and the electronic components 150 in the inner space 100IS of the battery pack 100 may be about 90% or more. According to embodiments, the occupancy ratio of the foam layer 145, the battery cell assembly 120, and the electronic components 150 in the inner space 100IS of the battery pack 100 may be about 95% or more.

The foam layer 145 may be an insulating carbonized layer. The foam layer 145 may be porous. The foam layer 145 may have a high ignition point, a high melting point, and low thermal conductivity. Accordingly, due to the foam layer 145, a fire occurring in one of the battery cell assemblies 120 may be prevented from propagating to neighboring battery cell assemblies 120.

The foaming agent 143 may include a polyurethane foaming agent containing flame-retardant additives, a polystyrene foaming agent such as flame-retardant expandable polystyrene (EPS) and extruded polystyrene (XPS), melamine foam, a PVC foaming agent, flame-retardant polyisocyanurate foam, a flame-retardant polyethylene foaming agent, flame-retardant silicon foam, phenolic foam, a flame-retardant EVA foaming agent, flame-retardant polyurea foam, or silmagel.

The battery pack 100 may include exhaust devices. The exhaust devices may be coupled to at least some of the side walls 112, 113, 114, and 115. The side walls 112, 113, 114, and 115 coupled to the exhaust devices may include exhaust paths connected to the exhaust devices. The exhaust devices may be configured to delay thermal propagation by discharging a high-temperature gas from the inside of the battery pack 100 to the outside when at least one of the plurality of battery cell assemblies 120 is in a thermal runaway state.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include inter-bus bars. Due to the inter-bus bars, the plurality of battery cell assemblies 120 may be connected in series, and the battery pack 100 may output a high voltage.

The electronic components 150 may be provided in the pack housing 110. The electronic components 150 may be between the plurality of battery cell assemblies 120 and one of the side walls 112, 113, 114, and 115 on which the exhaust devices are installed.

The electrical components 150 may include, for example, a BMS. The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include sensors for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120.

The electronic components 150 may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

### (Second Embodiment)

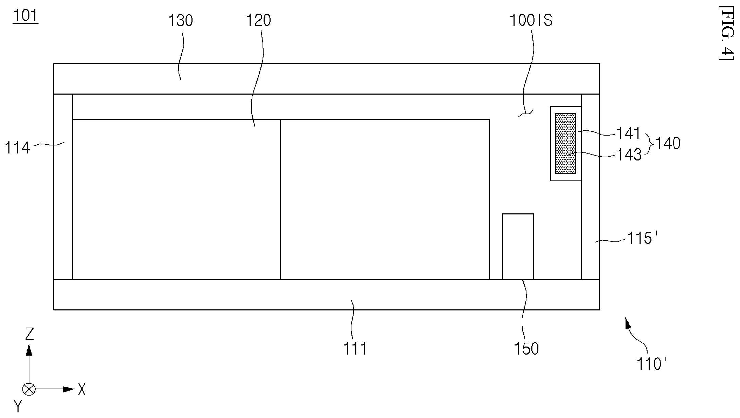

FIG. 4 is a plan view of a battery pack 101 according to other embodiments.

Referring to FIG. 4, the battery pack 101 may include a pack housing 110', a plurality of battery cell assemblies 120, a lid 130, and a foaming device 140. The battery pack 101 may include the pack housing 110' instead of the pack housing 110 (see FIG. 2). The pack housing 110' is substantially the same as the pack housing 110 (see FIG. 2) except for a side wall 115'.

According to embodiments, the foaming device 140 may be coupled to the side wall 115'. According to embodiments, the foaming device 140 may be in an inner space 100IS of the pack housing 100. Accordingly, the side wall 115' may not include a foam hole.

### (Third Embodiment)

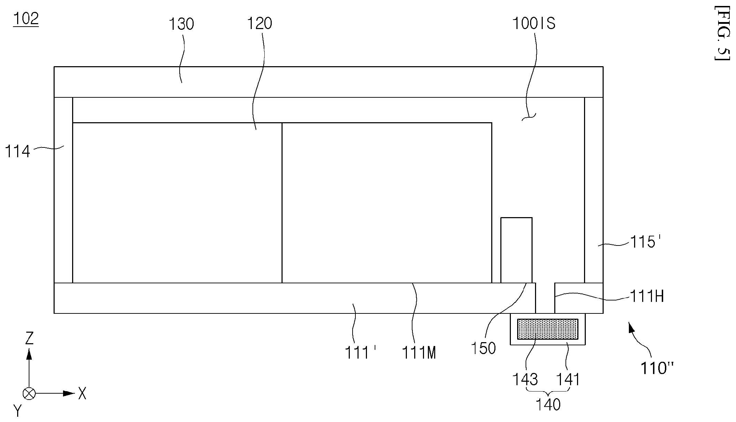

FIG. 5 is a plan view of a battery pack 102 according to other embodiments.

Referring to FIG. 5, the battery pack 102 may include a pack housing 110", a plurality of battery cell assemblies 120, a lid 130, and a foaming device 140. The battery pack 101 may include the pack housing 110" instead of the pack housing 110 (see FIG. 2). The pack housing 110" is substantially the same as the pack housing 110 (see FIG. 2) except for a side wall 115' and a base plate 111'.

According to embodiments, the foaming device 140 may be coupled to the base plate 111'. The base plate 111' may include a foam hole 111H connected to the foaming device 140. The side wall 115' may not include a foam hole.

### (Fourth Embodiment)

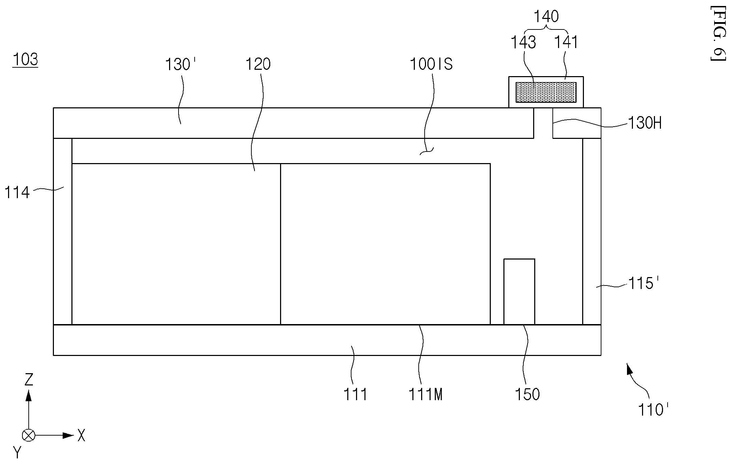

FIG. 6 is a plan view of a battery pack 103 according to other embodiments.

Referring to FIG. 6, the battery pack 103 may include a pack housing 110', a plurality of battery cell assemblies 120, a lid 130', and a foaming device 140. The battery pack 101 may include the pack housing 110' and the lid 130' instead of the pack housing 110 (see FIG. 2) and the lid 130 (see FIG. 2). The pack housing 110' is substantially the same as that described above with reference to FIG. 4.

According to embodiments, the foaming device 140 may be coupled to the lid 130'. The lid 130' may include a foam hole 130H connected to the foaming device 140.

### (Fifth Embodiment)

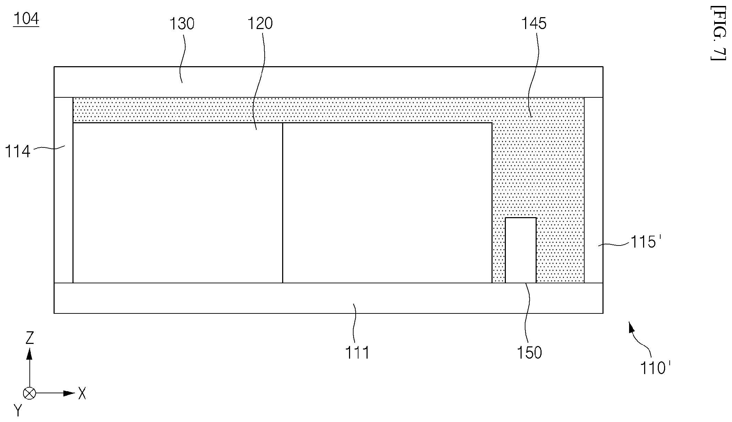

FIG. 7 is a plan view of a battery pack 104 according to other embodiments.

Referring to FIG. 7, the battery pack 104 may include a pack housing 110', a plurality of battery cell assemblies 120, a lid 130, and a foam layer 145. The pack housing 110' is substantially the same as that described above with reference to FIG. 4. The foam layer 145 is substantially the same as that described above with reference to FIGS. 1 to 3.

According to embodiments, the battery pack 100 may include the foam layer 145 formed beforehand. The foam layer 145 may block moisture and air from the outside and allow an operating temperature of each of the plurality of battery cell assemblies 120 to be maintained relatively constant. The foam layer 145 may also support each of the plurality of battery cell assemblies 120 to improve the earthquake resistance and impact resistance of the battery pack 100. In addition, the foam layer 145 may absorb swelling of a plurality of battery cells of each of the plurality of battery cell assemblies 120.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate and a side wall;
a plurality of battery cell assemblies on the base plate;
a lid coupled to the side wall of the pack housing; and
a foaming device configured to release a foam layer into an inner space defined by the pack housing and the lid.

2. The battery pack of claim 1, wherein the foaming device is configured to release the foam layer in response to a thermal runaway event or external impact.

3. The battery pack of claim 1, further comprising electronic components on the base plate,
wherein a space occupancy ratio of the foam layer released from the foaming device, the electronic components, and the plurality of battery cell assemblies in the inner space is 90% or more.

4. The battery pack of claim 1, wherein the foaming device is outside the pack housing.

5. The battery pack of claim 1, wherein the foaming device is in the inner space.

6. The battery pack of claim 1, wherein the foaming device includes a foaming agent configured to form the foam layer and a case containing the foaming agent.

7. The battery pack of claim 6, wherein the foaming agent includes silmagel.

8. The battery pack of claim 1, wherein the foaming device is of a spring type or a rupture disk type.

9. The battery pack of claim 1, wherein the foaming device is coupled to the side wall of the pack housing.

10. The battery pack of claim 1, wherein the foaming device is coupled to the base plate of the pack housing.

11. The battery pack of claim 1, wherein the foaming device is coupled to the lid of the pack housing.

12. The battery pack of claim 1, wherein the foamed layer is porous.

13. The battery pack of claim 1, wherein the foam layer is an insulating carbonized layer.
